Europäisches Patentamt

European Patent Office

Office européen des brevets

(11) Publication number : **0 447 150 A2**

(12) # EUROPEAN PATENT APPLICATION

(21) Application number : 91301995.6

(51) Int. Cl.⁵ : **B60N 2/44**

(22) Date of filing : 11.03.91

(30) Priority : 12.03.90 AU 9036/90

(43) Date of publication of application :
18.09.91 Bulletin 91/38

(84) Designated Contracting States :
DE FR GB IT SE

(71) Applicant : KITAGAWA LIMITED
40th Floor, Bond Center, East Tower
Queensway (HK)

(72) Inventor : Rohrlach, Milo Leslie
28 Balmoral Avenue
North Brighton, South Australia (AU)

(74) Representative : Quest, Barry et al
M'CAW & Co. 41-51 Royal Exchange Cross
Street
Manchester M2 7BD (GB)

(54) Tilt control means.

(57)  A tilt control mechanism comprises three basic interacting devices, one being coupled to a tilting frame, one being a shaft assembly, and one being movable in between the other two and having sprag release lugs thereon which function to push spring loaded sprags away from cam lobes which form part of the shaft assembly, but upon return to a reset position release the sprags so that they again engage the cam lobes. The sprags may comprise balls or rollers.

EP 0 447 150 A2

FIG 2

## TILT CONTROL MEANS

This invention relates to a tilt control means for controlling the tilt of one element of a device with respect to another, for example a head restraint for a motor vehicle, the tilt of the seat with respect to the base of a chair, or the tilt of a seat back with respect to the seat or a chair. There are also many other applications wherein there is a need for a tilt control means, and particularly a need for a tilt control means wherein there is no requirement for a protruding knob or lever to control the tilt action.

### BACKGROUND OF THE INVENTION

In the Australian Patent Application No. 26773/88 dated 12th December 1988, there is described a tilt control means for a head restraint for a motor vehicle which functioned on the principle of "unwinding" a helical spring to increase its effective diameter and cause it to bear against the inner surface of a tube thereby locking the spring with respect to the tube. Upon "winding" of the spring, movement could be effected. This was particularly valuable in the use of a head restraint device for a motor vehicle because the system described therein utilised screw threaded means to sense termination of movement in one direction whereupon "winding" of the spring reduced diameter and enabled the tilting member to return to its original position, but in any position between its original and final position when moving in the opposite direction, a positive lock existed between the moving and fixed part of the device in the backward direction.

This invention also seeks to achieve a result which is at least equivalent to that described in the aforesaid application, but seeks to do so without the use of screw threaded means, and utilising in lieu thereof cam/roller means which are disengaged in the forward mode of tilt but become re-engaged upon any slight backward movement during that forward mode; however, being retained disengaged for entire rearward movement to the reset position.

### BRIEF SUMMARY OF THE DRAWINGS

In an embodiment of this invention, a tilt control mechanism comprises three basic interacting devices, one being coupled to a tilting frame, one being a shaft assembly, and one being movable in between the other two and having sprag release lugs thereon which function to push spring loaded sprags away from cam lobes which form part of the shaft assembly, but upon return to a reset position release the sprags so that they again engage the cam lobes. The sprags may comprise balls or rollers.

More specifically, the invention consists of a shaft assembly itself comprising a shaft fixedly carrying on it a multi-lobe cam, a tilting frame journalled by the shaft for pivotal movement about a central axis of the shaft, a drum fast with the tilting frame and having a circularly curved inner surface, said inner surface being in axial alignment with the cam but spaced radially outwardly therefrom, a plurality of sprags, spray springs urging said sprags into engagement with both respective said cam lobes and said drum inner surface to inhibit relative rotation of the tilting frame and shaft in a second direction but allow relative rotation in a first direction, a lug ring rotatable about said shaft central axis and having sprag release lugs operatively located between said drum and sprags, an abutment surface on the drum engageable with said lug ring to effect rotation of said lug ring in said first direction wherein said lugs release said sprags from engagement with said cam lobes, the configuration being such that rotation of said drum in said second direction causes corresponding rotation of the lug ring and movement of said sprags also in said second direction which in turn permits re-engagement of the sprays with the cam lobes.

### BRIEF DESCRIPTION OF THE DRAWINGS

An embodiment of the invention is described hereunder with respect to, and is illustrated in, the accompanying drawings, in which:

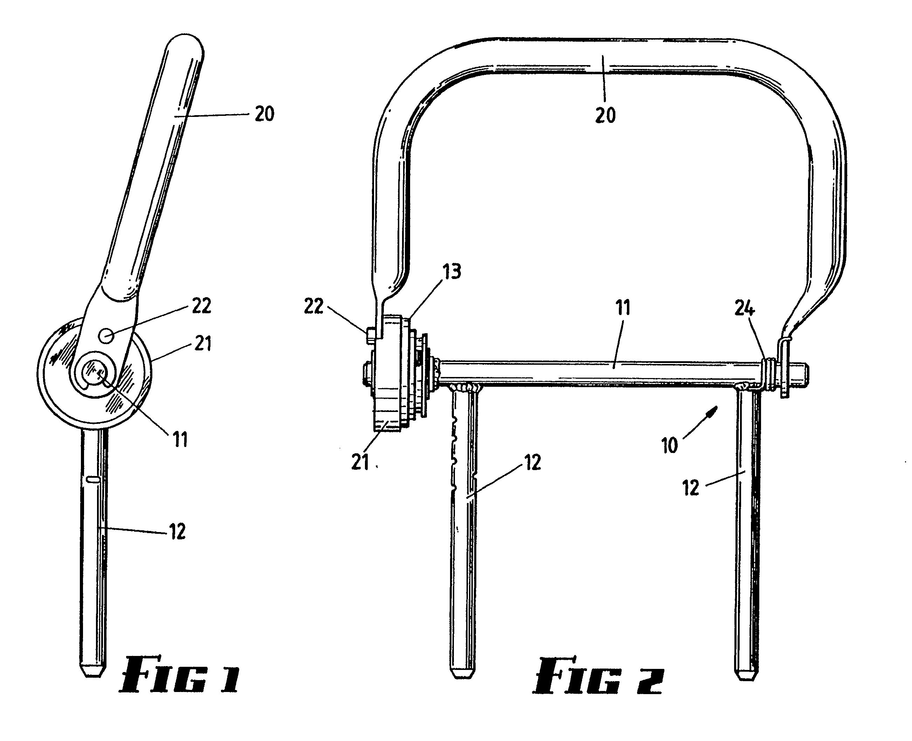

Fig. 1 is a front elevation of an adjustable head rest restraint for a motor vehicle,

Fig. 2 is an end elevation of Fig. 1,

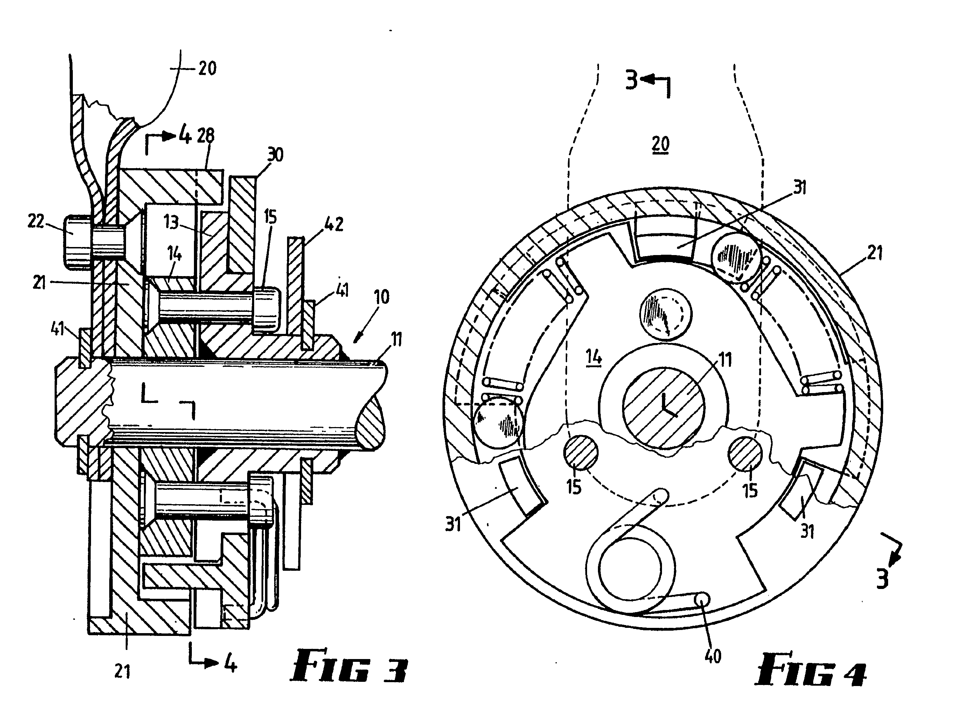

Fig. 3 is an elevational section through the tilt control mechanism of the head restraint,

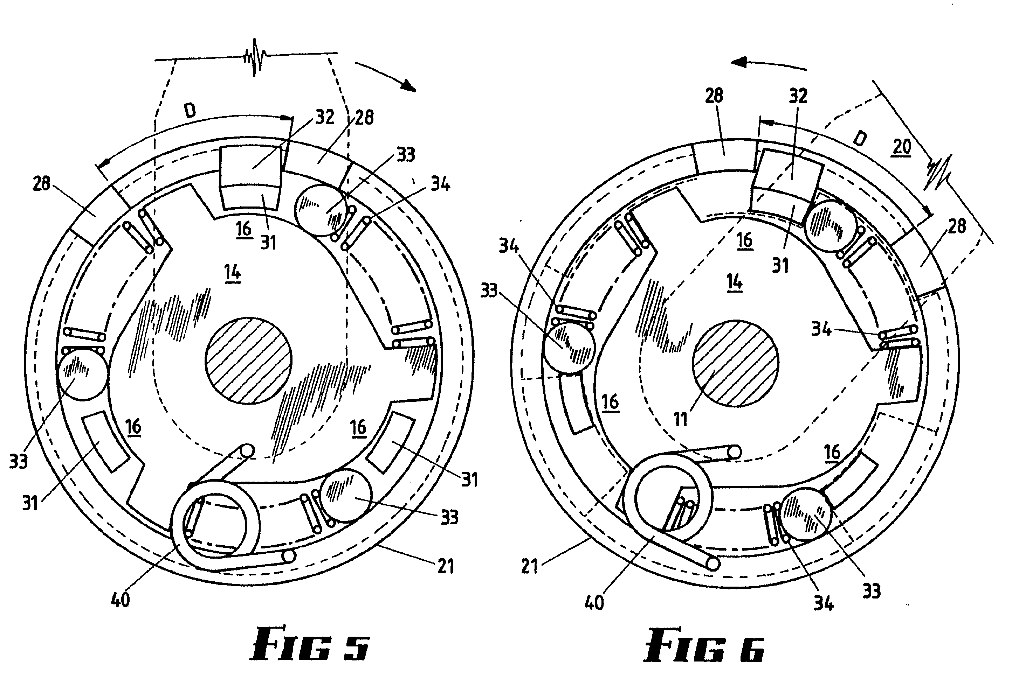

Fig. 4 is an end elevational section taken on two axially displaced planes identified by the line 4-4 of Fig 3, Fig. 4 also showing at 3-3 two planes illustrating the section of Fig. 3,

Fig. 5 illustrates the restraint mechanism in a rearward ,position from which it may be moved forwardly by a drum on the tilting frame disengaging sprags from respective cam lobes,

Fig. 6 illustrates the restraint mechanism in a forward position wherein sprag release lugs on a lug ring move the sprags away from their cam lobes and allow the tilting frame to reset back to its initial rearward position, and

Fig. 7 is an "exploded" view of the components of the three interacting devices.

In this embodiment a shaft assembly 10 comprises a shaft 11 which extends across two support pins 12 to form a frame, the support pins 12 normally entering receiving apertures in a seat back of a motor vehicle.

The shaft 11 has welded to it a stop plate 13 to which a cam plate 14 is secured by rivets 15, the cam plate 14 having three radially outstanding cam lobes 16 thereon. The stop plate 13 has peripheral recesses 17, the function of which is described hereunder.

The head restraint comprises an inverted 'U' shaped pivoting frame 20 which is journalled about the shaft 11 for rotation, and one end of the pivoting end 20 is fastened to a drum 21 by a rivet 22, the drum 21 also having a circular aperture 23 the surface of which forms a bearing surface with respect to the shaft 11. The other end of the pivoting frame 20 is coupled by means of a return spring 24 to one of the support pins 12, the return spring 24 providing a bias to return the pivoting frame 20 in an anticlockwise direction (rearward) as seen in the accompanying drawings. The aperture 23 is in a central discoid portion 25 surrounded by a rim 26. A slot 27 co-operates with rivet 22 to retain the pivoting frame 20, and two shallow axially extending lugs 28 are directed towards the cam plate 14 as best seen in Fig. 7. The lugs 28 are spaced apart and co-operate with a lug ring 30. A circumferential distance 'D' exists between the two lug rings 28 (Figs. 5 and 6).

As shown best in Fig. 7, the lug ring 30 (which is the third basic interacting device) has three lugs 31 projecting therefrom, but the upper of the three lugs 31 is L-shape, having a radially outwardly extending portion 32 which is shallower than the remainder of the lug 31, and is co-operable with the lugs 28. Side surfaces of the lug 31 are abutment surfaces. The lugs 31 project through the circumferentially extending recesses 17 in the stop plate 13 and the abutment surfaces of lug 31 engage the sprags 33, in this embodiment being rollers, when the lug ring 30 is caused to change its rotational position with respect to the cam plate 14, releasing the rollers from engagement with the cam lobes 16. As shown in Fig. 6, when this occurs the sprag rollers 33 are moved away from the cam lobes 16. When, however, the lugs 31 are displaced anticlockwise (Fig. 5) springs 34 urge the sprags onto the cam lobes to prevent rotation of the drum 21 in an anticlockise direction (Fig. 5).

Besides the springs 24 and 34, there is an over centre spring 40 co-acting between stop plate 13 and cam 14 on the one part and lug ring 30, and spring 40 changes its position from that shown in Fig. 5 to that shown in Fig. 6 when the drum 21 is rotated with respect to the lug ring 30 (with which it co-acts), and at the end of the clockwise rotation, and the left hand lug 28 engages the abutment surfaces of the outwardly extending portion 32 of the central lug 31, the distance 'D' being sufficient to permit the required amount of movement to effect change of spring position.

The over centre spring 40 has sufficient spring rate and return force to overcome the effect of the three springs 34 and thereby retain the sprag rollers 33 clear of the cam lobe surfaces 16, enabling the return spring 24 to return the pivoting frame 20 to its rearward position. When this occurs, the right hand lug 28 engages the outwardly extending portion 32 of the central lug 31 and resets it, the return spring 24 exerting a greater force and overcoming the effect of the over centre spring 40, so that a resetting condition is effected.

It will be noted that central recess 17 of the stop plate 13 extends for a much greater circumferential distance than the other two recesses, and comprises a central portion which is deeper than two flanking portions, the central portion accommodating the central lug 31 and the flanking portions accommodating the lugs 28 which have a "lost motion" with respect to the outwardly extending lug portion 32.

As can be seen from Fig. 7, the distal faces of the lugs 27 are limited in their movement by abutment with the surfaces which define the ends of the elongate recess 17, both in forward and rearward directions. This is a "fail safe" feature which is of importance under extreme conditions, such as may be encountered in a crash.

The entire restraint mechanism is retained axially on the shaft 11 by means of C-clips 41, and a backing plate 42 serves, inter alia, to retain the ends of the over centre spring 40 respectively in the drum 21 and the lug ring 30. it will be noted that although only one over centre spring 40 is illustrated, use can conveniently be made of two or more if required.

## Claims

1. Tilt control means comprising:

a shaft assembly itself comprising a shaft fixedly carrying on it a multi-lobe cam,

a tilting frame journalled by the shaft for pivotal movement about a central axis of the shaft,

a drum fast with the tilting frame and having a circularly curved inner surface, said inner surface being in axial alignment with the cam but spaced radially outwardly therefrom,

a plurality of sprags, sprag springs urging said sprags into engagement with both respective said cam lobes and said drum inner surface to inhibit relative rotation of the tilting frame and shaft in a second direction but allow relative rotation in a first direction,

a lug ring rotatable about said shaft central axis and having sprag release lugs operatively located between said drum and sprags, an abutment surface on the drum engageable with said lug ring to effect rotation of said lug ring in said first direction wherein said lugs release said sprags from engagement with said cam lobes, the configuration being such that rotation of said drum in said second direction causes corresponding rotation of the lug ring and movement of said sprags also in said second direction which in turn permits re-engagement of the sprags with the cam lobes.

2. Tilt control means according to claim 1 further comprising an over-centre spring co-acting between the stop plate and cam of the one part, and the lug ring of the other part, there being two abutment surfaces on the drum, one of said sprag release lugs having abutment surfaces on opposite sides, the configuration being such that, at the completion of said rotation in said first direction, a said abutment surface on the drum abuts a said lug abutment surface and causes sufficient rotation of the lug ring to in turn cause such change of over-centre spring shape that the sprag release lugs effect said sprag release,

and at completion of said rotation in said second direction, the other of said drum abutment surfaces abuts the other of said lug abutment surfaces, and causes sufficient rotation of the lug ring to in turn cause such change of over-centre spring shape that the sprag release lugs disengage from the sprags.

3. Tilt control means according to claim 1 or claim 2 wherein said spraps are rollers.

4. Tilt control means according to claim 2 further comprising a stop plate fast on the shaft, a plurality of recesses circumferentially spaced around the periphery of the stop plate, said lugs exdending axially through respective said recesses, surfaces of said recesses defining their ends being spaced apart by such distances as to limit said lug ring rotational movement.

5. Tilt control means according to claim 2 further comprising a stop plate fixedly carried on the shaft, an elongate recess in the periphery of the stop plate, said drum having a pair of lugs which ex:end axially through said elongate recess, said drum abutment surfaces being surfaces of respective said drum lugs,

the surfaces defining the ends of said elongate lug being spaced apart by such a distance as to limit rotational movement of said drum.

6. Tilt control means according to claim 2 further comprising a return spring co-acting between said tilting frame and shaft and urging said tilting frame to rotate about said shaft in said second direction.

FIG 2

FIG 1

FIG 3

FIG 4

EP 0 447 150 A2

EP 0 447 150 A2

**FIG 5**

**FIG 6**